Europäisches Patentamt

European Patent Office

Office européen des brevets

(19)

(11) Veröffentlichungsnummer: **0 198 096**
**A1**

## (12) EUROPÄISCHE PATENTANMELDUNG

(21) Anmeldenummer: **85104398.4**

(51) Int. Cl.⁴: **G 01 D 5/44**

(22) Anmeldetag: **11.04.85**

(43) Veröffentlichungstag der Anmeldung: **22.10.86**
**Patentblatt 86/43**

(84) Benannte Vertragsstaaten: **AT BE CH DE FR GB LI NL SE**

(71) Anmelder: **INSTITUT PO MEBELI I OBSAVEJDANE, VI. Poptomov-Strasse 67, Sofia (BG)**

(72) Erfinder: **Sivov, Ferdo Atanassov, Dr.-Ing., At.Nenov-Strasse 43, Sofia (BG)**

(74) Vertreter: **Ebbinghaus, Dieter et al, v. FÜNER, EBBINGHAUS, FINCK Patentanwälte European Patent Attorneys Mariahilfplatz 2 & 3, D-8000 München 90 (DE)**

(54) **Strahlsensor.**

(57) Strahlsensor zum Steuern, Messen und Kontrollieren von Maßen, Abständen u.a., der aus einem Gehäuse (3) mit einer darin montierten Strahldüse (14) besteht, die mit einer Speisekammer (19) verbunden ist, welche ihrerseits mit einem Speisekanal (15) verbunden ist. Eine in der von der Strahldüse (14) begrenzten Fläche angeordnete Fangdüse (13) ist mit einem Ausgangskanal (20) verbunden. Zwischen dem Speisekanal (15) und der Speisekammer (19) im Gehäuse (3) ist eine zusätzliche Kammer (7) ausgebildet, in der ein beweglicher Ventilkörper (8) mit zweiseitig ausgebildeten kegelförmigen Sitzen angeordnet ist, der mit einem beweglich im Gehäuse (3) montierten Einschaltfühler (11) verbunden ist.

FIG. 1

INSTITUT PO MEBELI                    EPAB-32701.5

I OBSAVEJDANE                         11. April 1985

## STRAHLSENSOR

Die Erfindung betrifft einen Strahlsensor für Objekte, der in verschiedenen Systemen zum Steuern, Messen und Kontrollieren von Abmessungen, Abständen u.a. eingesetzt werden kann.

Ein bekannter Strahlsensor enthält ein Gehäuse mit darin montierter Strahldüse, die mit einer Speisekammer verbunden ist, welche ihrerseits mit einem Speisekanal verbunden ist, und eine Fangdüse, die in der von der Strahldüse begrenzten Fläche angeordnet und mit einem Ausgangskanal verbunden ist. Der Speisestrahl strömt aus der ringförmigen Speisedüse heraus und wird gegen das Objekt gerichtet. Der vom Objekt reflektierte Strahl wird von der Fangdüse aufgenommen und dem Ausgangskanal zugeführt. Dieser wird durch einen Umformer-Verstärker unifiziert. Ein Nachteil dieser Ausführung liegt in dem hohen Energieverbrauch infolge des konstanten Verbrauchs von Speiseenergie, sowie in der Möglichkeit, einen absolut sehr hohen Wert des Ausgangssignals bei unzulässiger Annäherung des Objekts an den Fühler zu erreichen, und in der Gefahr von Störungen.

Der Erfindung liegt die Aufgabe zugrunde, einen Strahlsensor für Objekte mit herabgesetztem Verbrauch an Speiseenergie zu entwickeln, der ein im Wert begrenztes Ausgangssignal und eine hohe Betriebszuverlässigkeit gewährleistet.

Diese Aufgabe wird erfindungsgemäß durch den im Patentanspruch 1 beschriebenen Fühler gelöst.

Bevorzugte Weiterbildungen des erfindungsgemäßen Fühlers sind Gegenstand der Patentansprüche 2 bis 4.

Ein Vorteil der Erfindung liegt in dem herabgesetzten Verbrauch an Speiseenergie, in der Möglichkeit zur Begrenzung des Werts des Ausgangssignals und die erhöhte Verläßlichkeit und Lebensdauer des Fühlers und des mit ihm im System verbundenen Umformer-Verstärkers.

Die Erfindung wird anhand der in der Zeichnung gezeigten Ausführungsbeispiele näher erläutert. Es zeigen:

Fig. 1    den Schnitt durch einen Strahlsensor mit mechanisch angetriebenem Ventilsystem,

Fig. 2    den Schnitt durch den Fühler und einen Teil des Ventilsystems des Strahlsensors,

Fig. 3    den Schnitt durch den Strahlsensor bei einem anderen Ausführungsbeispiel mit magnetischem Antrieb des Ventilsystems und

Fig. 4   das Blockschaltbild eines Steuersystems mit
          einem Strahlsensor.

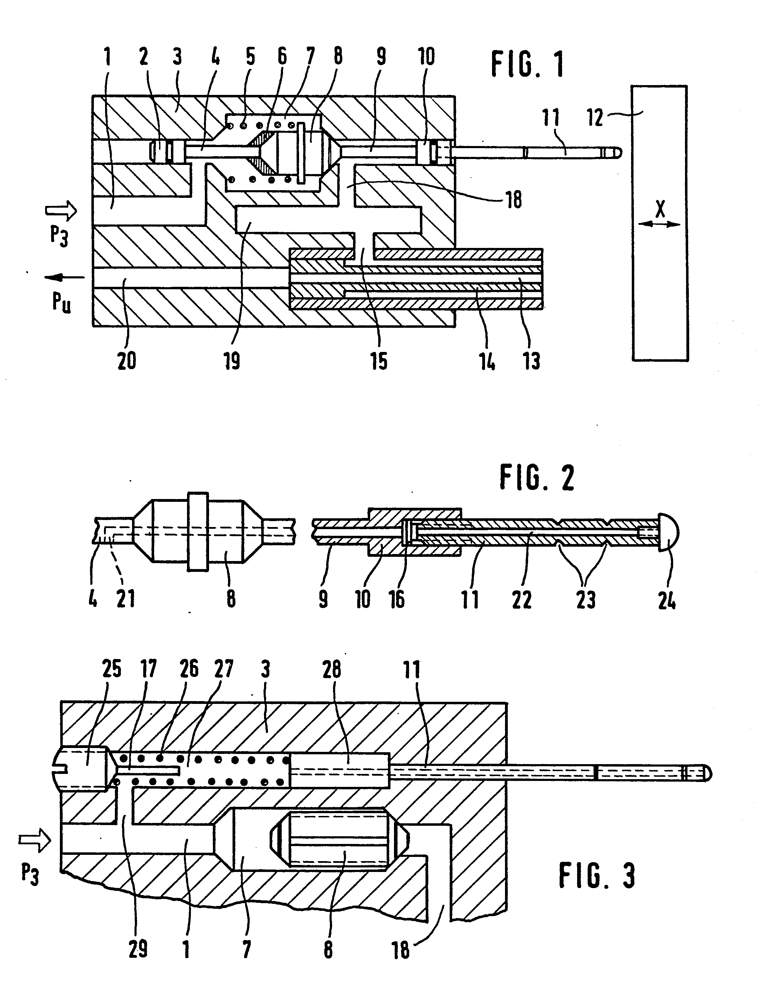

Der erfindungsgemäße Strahlsensor besteht aus einem Gehäuse
3 mit darin montierter Strahldüse 14, die über einen Kanal
15 mit einer Speisekammer 19 verbunden ist.      Eine Fangdüse 13, die in der von der Strahldüse 14 begrenzten Fläche
angeordnet ist, ist mit einem im Gehäuse 3 ausgebildeten
Ausgangskanal 20 verbunden.      Die Speisekammer 19 ist
mit einem Speisekanal 1 verbunden; zwischen dem Speisekanal 1 und der Speisekammer 19 ist im Gehäuse 3 eine zusätzliche Kammer 7 ausgebildet, in der ein beweglicher Ventilkörper 8 mit auf beiden Seiten ausgebildeten kegelförmigen
Sitzen angeordnet ist. Die Kammer 7 ist mit der Speisekammer 19 durch einen Kanal 18 verbunden. Der Ventilkörper 8
ist gemäß Fig. 1 zweiseitig mittels zwei Achsen 4 und 9 mit
Führungen 2 und 10 verbunden, die in Kanälen des Gehäuses
3 angeordnet sind. An der vorderen Führung 10 ist mittels
einer Schraubverbindung ein Einschaltfühler 11 befestigt,
der beweglich im Gehäuse 3 montiert ist. Im hinteren Ende
des Ventilkörpers 8 befindet sich ein elastisches Element
6. Der Ventilkörper 8 ist durch eine Feder 5 abgestützt.
In der Außenfläche des Fühlers 11 sind Schlitze 23 vorgesehen; im Fühler 11 ist ein Kanal 22 ausgebildet, der in
seinem vorderen Ende durch einen Abdichtbolzen 24 verschlossen ist (Fig. 2). In der Führung 10, der Achse 9, dem Ventilkörper 8 und der Achse 4 ist ein Längskanal 21 ausgebildet, der den Speisekanal 1 mit dem Kanal 22 des Fühlers
11 verbindet. Im Kanal der Führung 10 ist eine akustische
Pfeife 16 montiert.

Bei einer anderen Ausführungsvariante (Fig. 3) ist der
Ventilkörper 8 mit Längsdurchbrüchen versehen und aus
einem Werkstoff mit magnetischen eigenschaften hergestellt.
Das hintere Ende des Einschaltfühlers 11 ist mit einem

- 4 -

Dauermagneten 28 verbunden, der oberhalb des Ventilkörpers 8 in einer im Gehäuse 3 ausgebildeten zweiten zusätzlichen Kammer angeordnet und von einer Feder 26 abgestützt ist. An ihrem anderen Ende ist die Feder 26 von einem Abdruckbolzen 25 mit einem Begrenzer 17 abgestützt. Der Speisekanal 1 ist durch einen Kanal 29 mit einer zweiten zusätzlichen Kammer 27 verbunden. Die Strahldüse 14 und der Fühler 11 sind auf das Objekt 12 gerichtet.

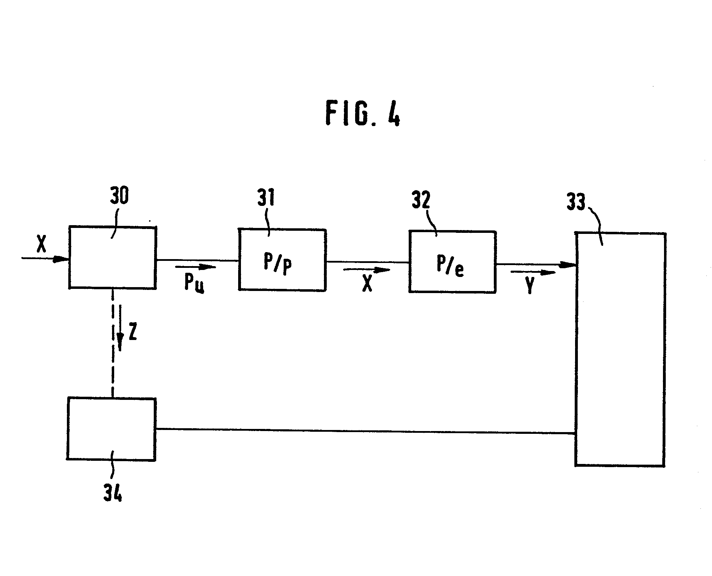

Bei dem in Fig. 4 dargestellten Blockschaltbild wird das Ausgangssignal vom Empfänger 30 einem Verstärker 31 zugeführt, der mit einem pneumoelektrischen Umformer 32 verbunden ist, der seinerseits mit der Steuereinrichtung 33 verbunden ist. Andererseits ist der Strahlsensor akustisch mit einer akustischen Einrichtung 34 verbunden, die ihrerseits mit der Steuereinrichtung 33 zur Störungssperre verbunden ist.

Die Wirkungsweise des erfindungsgemäßen Strahlsensors ist wie folgt:

Bei Annäherung eines Objekts 12 (Fig. 1) an den Strahlsensor wird unmittelbar bevor es in den Indikationsbereich gelangt, der Einschaltfühler 11 betätigt, wobei die Speisung zur Strahldüse 14 eingeschaltet wird. Dies wird durch Verschiebung des Ventilkörpers 8 gegen die Feder 5 erzielt (Fig. 1). Im folgenden Moment wird bei genügender Annäherung des Objekts 12 infolge des bekannten physikalischen Effekts des Strömungsreflexes im Ausgangskanal 20 ein einzelnes Ausgangssignal erhalten. Wenn sich dann das Objekt 12 entfernt, schließt der Ventilkörper 8 den Durchgangsquerschnitt und unterbricht den Verbrauch an Speiseenergie. Falls sich nach dem Umschalten auf ein einzelnes Ausgangssignal das Objekt 12 weiter gegen den Strahlsensor bewegt, schließt zuerst der Ventilkörper 8 mittels des elastischen

Elements 6 die linke Ventilöffnung und unterbricht den Zugang der Speiseenergie und das elastische Element 6 erlaubt ein bestimmtes Absinken des Ventilsystems. Falls sich das Objekt 12 weiter zum Strahlsensor bewegt, bricht der Einschaltfühler 11, was durch die Schlitze 23 abgeschwächt ist, was seinerseits ein akustisches Signal durch die akustische Pfeife 16 hervorruft. Die Strahldüse 14 wird nur gespeist, wenn sich das Objekt 12 im Indikationsbereich befindet.

Gemäß Fig. 3 bewegt das Objekt 12, wenn es in den Indikationsbereich gelangt, den Dauermagneten 28, der am Einschaltfühler 11 befestigt ist. Der Ventilkörper 8, der die Zufuhr der Speiseenergie ein- und ausschaltet, folgt der Bewegung des Dauermagneten 28. Wenn der Ventilkörper 8 in den beiden Endpositionen ist, wird die Speisung der Strahldüse 14 unterbrochen. In den Zwischenpositionen ist die Speisung eingeschaltet und es ist möglich, den Abstand bzw. das Vorhandensein des Objekts zu bestimmen. Die Längskanäle im Ventilkörper 8 dienen zum Durchlassen der Speiseströmung.

Das Einschalten des Strahlempfängers 30 (siehe Fig. 4) an die Steuereinrichtung 33 erfolgt über den Verstärker 31 und den pneumoelektrischen Umformer 32. Bei Störung wird das akustische Signal Z von der akustischen Einrichtung 34 aufgenommen, welche durch eine direkte Verbindung mit der Steuereinrictung 33 eine Störungssperre betätigen kann.

Das vorgeschlagene Ventilsystem zum Unterbrechen der Speisung kann auch bei anderen bekannten Strahlsensoren (mit einseitiger und zweiseitiger Wirkung) angewendet werden.

Der Einschaltfühler 11 kann mit verschiedenartigen Endstücken versehen werden (Rolle, Hebelmechanismus mit oder ohne Rolle, Mechanismus mit flacher Feder u.a.).

Patentansprüche:

1. Strahlsensor, bestehend aus einem Gehäuse (3) mit darin montierter Strahldüse (14), die mit einer Speisekammer (19) verbunden ist, die ihrerseits mit einem Speisekanal (1) verbunden ist, und einer Fangdüse (13), die in der von der Strahldüse (14) begrenzten Fläche angeordnet und mit einem Ausgangskanal (20) verbunden ist, dadurch g e k e n n z e i c h n e t , daß zwischen dem Speisekanal (1) und der Speisekammer (19) im Gehäuse (3) eine zusätzliche Kammer (7) ausgebildet ist, in welcher ein beweglicher Ventilkörper (8) mit zweiseitig ausgebildeten kegelförmigen Sitzen angeordnet ist, der mit einem im Gehäuse (3) beweglich montierten Einschaltfühler (11) verbunden ist.

2. Strahlsensor nach Anspruch 1, dadurch g e k e n n - z e i c h n e t , daß der Ventilkörper (8) zweiseitig mittels zwei Achsen (4, 9) mit in Kanälen im Gehäuse (3) montierten Führungen (2, 10) verbunden ist, wobei der Einschaltfühler (11) starr am vorderen Ende des Ventilkörpers (8) durch Schraubverbindung an der einen Führung (10) befestigt ist, daß in der zweiten Achse (9), im Ventilkörper (8) und in der ersten Achse (4) ein gemeinsamer Längskanal (21) ausgebildet ist, der den Speisekanal (1) mit dem im Fühler (11) vorgesehenen Kanal (22) verbindet, der im vorderen Ende des Fühlers (11) durch einen Abdichtbolzen (24) geschlossen ist, und daß der Ventilkörper (8) in seinem hinteren Ende durch eine Feder (5) abgestützt ist.

0198096

3. Strahlsensor nach Anspruch 1, dadurch  g e k e n n - z e i c h n e t ,  daß der Ventilkörper (8) mit Längsschlitzen versehen und aus einem Werkstoff mit magnetischen Eigenschaften hergestellt ist, wobei seine Verbindung  mit dem Einschaltfühler (11) indirekt magnetisch und das hintere Ende des Fühlers (11) mit einem Dauermagneten (28) verbunden ist, der oberhalb des Ventilkörpers (8) in einer im Gehäuse (3) ausgebildeten zusätzlichen Kammer (27) angeordnet und durch eine Feder (26) abgestützt ist,  die an ihrem anderen Ende von einem Andrückbolzen (25) mit Begrenzer (17) begrenzt ist, wobei der Speisekanal (1) durch einen Kanal (29) mit der zweiten zusätzlichen Kammer (27) verbunden ist.

4. Strahlsensor nach Anspsruch 1 oder 2, dadurch  g e - k e n n z e i c h n e t ,  daß in der Außenfläche des Fühlers (11) Schlitze (23) ausgebildet sind, und daß in der Führung (10) eine akustische Pfeife (16) montiert ist.

1 / 2

# FIG. 1

# FIG. 2

# FIG. 3

85104398.4
EPAB 32704.9

0198096

# FIG. 4

Europäisches
Patentamt

**EUROPÄISCHER RECHERCHENBERICHT**

0198096

Nummer der Anmeldung

EP 85 10 4398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 894 552 (FOXBORO) <br> * Zusammenfassung; Figur 1 * <br><br> ----- | 1 | G 01 D 5/44 |

**RECHERCHIERTE SACHGEBIETE (Int. Cl.4)**

G 01 D
G 01 B
F 15 B

Der vorliegende Recherchenbericht wurde für alle Patentansprüche erstellt.

| Recherchenort | Abschlußdatum der Recherche | Prüfer |
|---|---|---|
| DEN HAAG | 20-12-1985 | HOORNAERT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82